# EUROPÄISCHE PATENTSCHRIFT

(11) **EP 1 503 199 B1**
(45) Veröffentlichungstag und Bekanntmachung des Hinweises auf die Patenterteilung: **24.07.2013**
(21) Anmeldenummer: 04014933.8
(22) Anmeldetag: 25.06.2004
(51) Int. Cl.: G01M 3/20

(54) **Lecksuchverfahren und Lecksuchanordnung zur Durchführung des Verfahrens**
Procedure and device for leak detection
Procédé et dispositif de détection de fuites

(30) Priorität: 29.07.2003 DE 10334455
(43) Veröffentlichungstag der Anmeldung: 02.02.2005
(73) Patentinhaber: Pfeiffer Vacuum GmbH, 35614 Asslar (DE)
(72) Erfinder: Lotz, Heinrich, 35578 Wetzlar (DE); Schopphoff, Andreas, 35614 Asslar (DE)
(74) Vertreter: Knefel, Cordula

(56) Entgegenhaltungen:
- EP-A- 0 072 892
- EP-A- 0 344 345
- EP-A- 0 825 346
- EP-A- 0 990 886
- EP-A- 1 205 741
- DE-A1- 3 124 205
- US-A- 3 520 176
- US-A- 3 616 680
- US-A- 5 561 240

## Beschreibung

Die Erfindung betrifft ein Lecksuchverfahren und eine Anordnung zur Durchführung des Verfahrens nach den Oberbegriffen der jeweiligen Schutzansprüche.

Zur Feststellung von Lecks in Vakuumkammern und anderen, zu einem Vakuumsystem gehörenden Behältern, wie zum Beispiel Pumpenräume, Verbindungselemente, Ventile, Messsysteme u. a., im Folgenden "Prüfling" genannt, werden Lecksucheinrichtungen verschiedener Art verwendet. Im Bereich der Vakuumtechnik sind zum Beispiel Einrichtungen im Einsatz, mit denen Leckstellen durch von außen eindringendes Prüfgas und dessen Registrierung mit einem Gasdetektor aufgefunden werden. Als Gasdetektoren werden vorzugsweise Massenspektrometer eingesetzt, die als Gasanalysatoren die Partialdrücke eines Gasgemisches messen und so geringste Mengen eines Prüfgases feststellen können.

Zur schnellen und präzisen Lokalisierung von Lecks wird neben einem Gasdetektor ein Evakuierungssystem benötigt. Als Hochvakuumpumpen haben sich hier Turbomolekularpumpen, welche in den meisten dieser Anwendungsfälle im Gegenstromprinzip arbeiten, bewährt. Solche Systeme werden zum Beispiel in den DE-OS 16 48 648, DE-OS 31 24 205, DE-OS 100 55 057 und DE-OS 195 23 430 beschrieben. Dabei macht man sich die Tatsache zu Nutze, dass leichte Gase wie Helium, welches in der Regel als Prüfgas verwendet wird, ein niedrigeres Druckverhältnis in Turbomolekularpumpen aufweisen als schwere Gase. So können diese leichten Gase gegen die Pumprichtung in merklichen Mengen auf die Hochvakuumseite diffundieren.

Bei den verwendeten einflutigen Turbomolekularpumpen wird über verschiedene Einlassstutzen Testgas aus dem Prüfling der Pumpe zugeführt. Der Gasdetektor, In der Regel als Massenspektrometer mit Heißkathodenionenquelle ausgeführt, ist auf der Hochvakuumseite der Turbomolekularpumpe angebracht. In der DE-OS 16 48 648 ist eine Anordnung zur Lecksuche mit einer zweiflutigen Turbomolekularpumpe gezeigt. Hier ist der Gasdetektor nicht auf der Hochvakuumseite, sondern auf einer Zwischenstufe der Turbomolekularpumpe angebracht. Für den Fall, dass große Lecks vorliegen, d. h. das große Mengen Prüfgas in die Pumpe und in den Gasdetektor einströmen, ergeben sich nach dem jeweiligen Messprozess sehr lange Totzeiten und somit stark reduzierte Taktzeiten. Der Grund dafür ist, dass die Turbomolekularpumpe für Helium nur ein begrenztes Saugvermögen aufweist und so mit langen Abpumpzeiten gerechnet werden muss.

Die US-A-3 616 680 schlägt vor, zwei Vakuumpumpen mit einer gemeinsamen Welle in einem gemeinsamen Gehäuse anzuordnen. Eine der Vakuumpumpen evakuiert die auf Lecks zu prüfende Kammer, die andere evakuiert den Detektor. Testgas gelangt im Gegenstromprinzip durch den Auslass der detektorseitigen Vakuumpumpe und wird von dieser einen Vakuumpumpe anschließend wieder abgesaugt.

In der EP-A-0 344 345 wird vorgeschlagen, jeweils Rezipient und Detektor mit einer Pumpstufe zu evakuieren und jeder dieser Pumpstufen eine Molekularpumpstufe im Bezug zum Gasstrom nachzuordnen.

Die EP-A-0 072 892 stellt eine Vakuumpumpe mit zwei axial hintereinander angeordneten Pumpstufen vor, die beide in Richtung eines zwischen ihnen angeordneten Vorvakuumanschlusses fördern. Die eine Pumpstufe ist dabei mit dem Rezipienten, die andere mit dem Detektor verbunden.

Der Erfindung liegt die Aufgabe zu Grunde, ein Lecksuchverfahren und eine zu dessen Durchführung geeignete Lecksuchanordnung vorzustellen, mit welcher möglichst kurze Taktzeiten erreicht werden. Dies soll auch dann der Fall sein, wenn große Mengen von Prüfgas anfallen. Dazu muss sicher gestellt sein, dass eine ausreichende Menge von Prüfgas den Gasdetektor erreicht und diese Menge auch schnell wieder aus der Detektorkammer abgepumpt werden kann.

Die Aufgabe wird durch die kennzeichnenden Merkmale der Schutzansprüche gelöst.

Durch das erfindungsgemäße Verfahren und die zu dessen Durchführung geeignete Anordnung wird sichergestellt, dass über eine Pumpenseite immer genügend Prüfgas in den Prüfdetektor gelangt. Im Falle einer Kontamination durch große Mengen Prüfgas ist dafür gesorgt, dass das Prüfgas über beide Seite der Molekularpumpe schnell wieder abgepumpt werden kann. Dadurch lassen sich die Taktzeiten wesentlich verkürzen.

Mit der zweiten Ausführungsform, bei der die beiden Seiten der Pumpe abwechselnd zur Prüfgaszufuhr eingesetzt werden, kann die Taktzeit noch einmal etwa halbiert werden. Die Empfindlichkeit der Lecksuche kann dadurch variiert werden, dass der Prüfgaseinlass an unterschiedlichen Stellen zwischen Hochvakuumseite und Vorvakuumseite erfolgt.

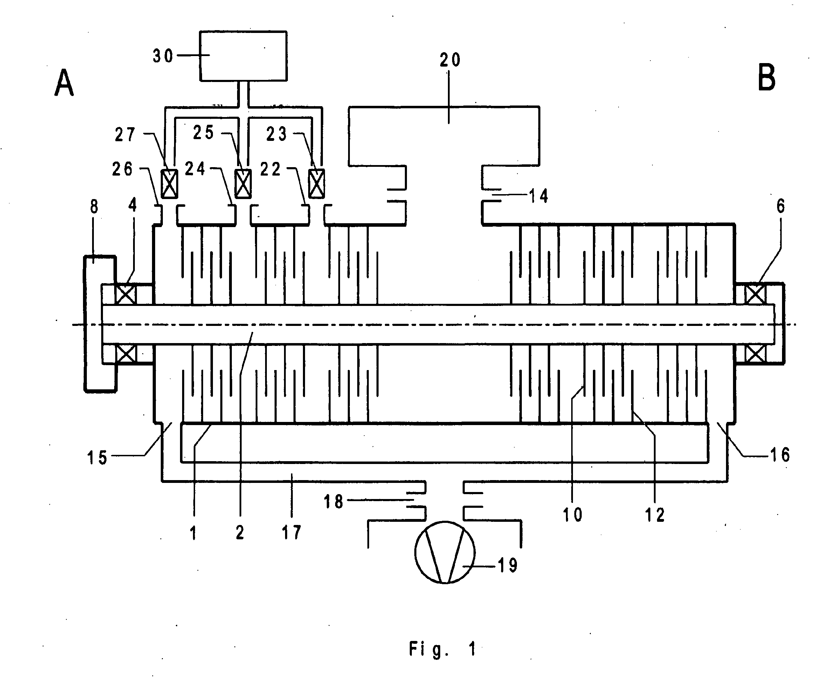

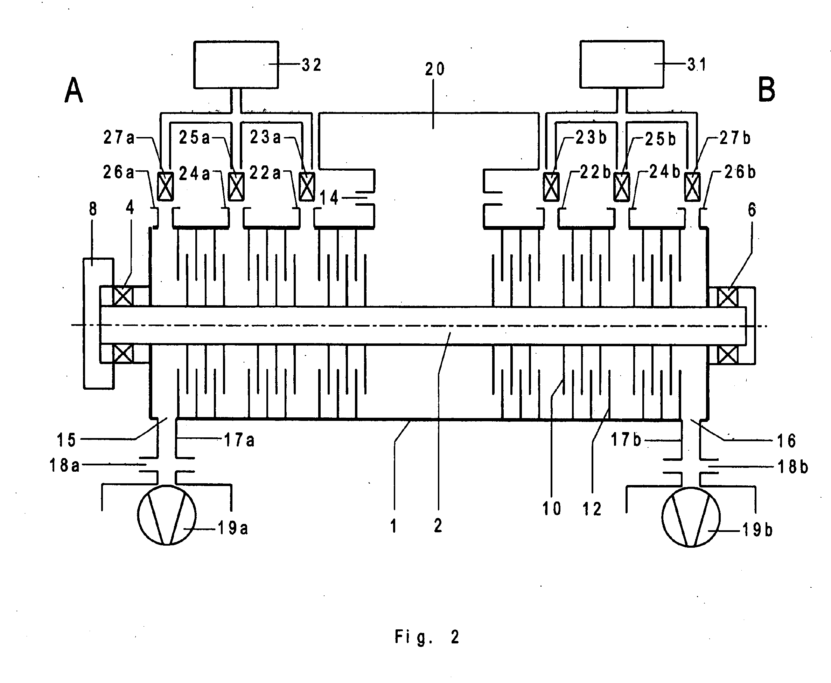

Anhand der Figuren 1 und 2 soll die Erfindung näher erläutert werden.
Fig. 1 zeigt die erfindungsgemäße Anordnung im Längsschnitt.
Fig. 2 zeigt eine weitere Ausgestaltungsform der Erfindung.

Hauptbestandteil der Lecksuchanordnung ist eine zweiflutige Molekularpumpe, die im vorliegenden Beispiel als Turbomolekularpumpe ausgebildet ist. Im Gehäuse 1 ist der Rotor 2 der Pumpe in Lagern 4 und 6 fixiert und wird durch einen Motor 8 angetrieben. Als pumpaktive Bauteile befinden sich auf dem Rotor Rotorscheiben 10, welche abwechselnd mit den Statorscheiben 12 in Achsrichtung hintereinander angeordnet sind. Die Anordnung kann sowohl spiegelbildlich gleich als auch unterschiedlich für beide Seiten A und B der Pumpe sein. Zum Einlass von Prüfgas aus dem Prüfling 30 sind auf einer Seite A der zweiflutigen Molekularpumpe mehrere Einlassstutzen 22, 24, 26 angebracht. Je nach gewünschter Empfindlichkeit wird das Prüfgas über die Ventile 23, 25, 27 und die Einlassstutzen 22, 24, 26 der Molekularpumpe an Stellen mit verschiedenem Druckniveau zugeführt. Dabei nimmt die Empfindlichkeit von der Seite höheren Druckes (Einlassstutzen 26) zur Seite niedrigeren Druckes (Einlassstutzen 22) hin zu. Die beiden Vorvakuumräume 15 und 16 werden über eine Leitung 17 zusammengeführt. Am Vorvakuumanschluss 18 ist eine Vorvakuumpumpe 19 angeordnet, welche nach höherem Druck hin ausstößt.

Das Prüfgas, welches je nach gewünschter Empfindlichkeit über einen der Einlassstutzen 22, 24 oder 26 der einen Seite A der zweiflutigen Molekularpumpe zugeführt wird, gelangt im Gegenstromprinzip, d. h. gegen die Pumprichtung, auf die Hochvakuumseite und zu dem Gasdetektor 20. Danach wird es nach beiden Seiten der Molekularpumpe hin abgepumpt und über die Vorvakuumräume 15 und 16 der Vorvakuumpumpe 19 zugeführt. Der Vorteil gegenüber herkömmlichen Lecksuchanordnungen mit einflutigen Molekularpumpen ist, dass das Abpumpen zusätzlich über die Seite B, bei der kein Prüfgas eingelassen wurde, erfolgt. So wird sicher gestellt, dass über eine Pumpenseite immer genügend Prüfgas den Gasdetektor erreicht und im Falle einer Kontamination durch große Mengen Prüfgas dieses über beide Seiten der Pumpe schnell wieder abgepumpt werden kann.

Eine weitere Ausführungsform der Erfindung ist in Fig. 2 dargestellt. Hier sind zum Einlass von Prüfgas aus verschiedenen Prüflingen 31, 32 auf beiden Seiten A und B der zweiflutigen Molekularpumpe Einlassstutzen 22a, 24a, 26a und 22b, 24b, 26b angebracht. Die beiden Vorvakuumräume 15, 16 sind nicht mit einander verbunden. Vielmehr sind sie jeweils über Vorvakuumanschlüsse 18a und 18b an separate Vorvakuumpumpen 19a und 19b angeschlossen.

Prüfgas kann bei dieser Ausführungsform, alternierend von verschiedenen Prüflingen 31, 32 kommend, einmal der einen Seite A der zweiflutigen Molekularpumpe über einen der Einlassstutzen 22a, 24a oder 26a über eines der Ventile 23a, 25a oder 27a und einmal der anderen Seite B über einen der Einlassstutzen 22b, 24b oder 26b durch eines der Ventile 23b, 25b oder 27b zugeführt werden. Das Abpumpen des Prüfgases erfolgt dann hinter den Molekularpumpstufen über getrennte Vorvakuumsysteme, bestehend aus jeweils den Vorvakuumräumen 15 und 16, den Vorvakuumanschlüssen 17a und 17b sowie aus den Vorvakuumpumpen 19a und 19b. Auf diese Weise können die beiden Seiten A und B der Molekularpumpe abwechselnd zur Zuführung von Prüfgas im Gegenstromprinzip zum Gasdetektor 10 bzw. zum Abpumpen des Prüfgases eingesetzt werden.

Die beiden Seiten der Molekularpumpe können z. B. als Turbomolekularpumpstufen oder als eine Kombination mit anderen Molekularpumpstufen, wie z. B. Holweckpumpstufen, ausgebildet sein. Bei den beiden Prüflingen 31 und 32 kann es sich auch um ein und denselben Prüfling handeln.

## Patentansprüche

1. Lecksuchverfahren mit Hilfe einer zweiflutigen Molekularpumpe, mit deren Hochvakuumanschluss (14) ein Gasdetektor (20) verbunden ist und deren beide Vorvakuumräume (15, 18) mit mindestens einer Vorvakuumpumpe (19, 19a, 19b) verbunden sind, wobei das Prüfgas über einen der Einlassstutzen (22, 24, 26), welche auf einer Seite (A) der zweiflutigen Molekularpumpe angebracht sind, der Molekularpumpe an einer Stelle zugeführt wird, die ein Druckniveau zwischen Hochvakuumdruck und Vorvakuumdruck aufweist, **dadurch gekennzeichnet, dass** ein Teil des Prüfgases gegen die Pumprichtung auf die Hochvakuumseite und somit in den Gasdetektor (20) gelangt und danach nach beiden Hochvakuumseiten der zweiflutigen Molekularpumpe hin und anschließend über ein Vorvakuumsystem, bestehend aus den beiden Vorvakuumräumen (15, 16) einer Verbindungsleitung (17) und einer Vorvakuumpumpe (19) abgepumpt wird.

2. Lecksuchanordnung, mit einer zweiflutigen Molekularpumpe mit Hochvakuumanschluss (14) und damit verbundenem Gasdetektor (20) mit einer Verbindungsleitung (17), welche zwei Vorvakuumräume (15, 16) zu einem gemeinsamen Vorvakuumanschluss (18) zusammenführt, und einer mit diesem verbundenen Vorvakuumpumpe (19), wobei auf einer Seite (A) der zweiflutigen Molekularpumpe zwischen Hochvakuumanschluss (14) und dem Vorvakuumraum (15, 16) ein oder mehrere Einlassstutzen (22, 24, 26) zur Zuführung von Prüfgas aus einem Prüfling (30) an Stellen mit einem Druckniveau zwischen Hochvakuumdruck und Vorvakuumdruck angebracht sind, **dadurch gekennzeichnet, dass** der Hochvakuumanschluss (14) mit beiden Seiten (A, B) der zweiflutigen Molekularpumpe verbunden ist, und dass die Lecksuchanordnung dazu eingerichtet ist, ein Teil des Prüfgases nach beiden Hochvakuumseiten der zweiflutigen Molekularpumpe hin und anschließend über ein Vorvakuumsystem, bestehend aus den beiden Vorvakuumräumen (15, 16) der Verbindungsleitung (17) und der Vorvakuumpumpe (19), abzupumpen.

3. Lecksuchverfahren nach Anspruch 1 , **dadurch gekennzeichnet, dass** das Prüfgas, alternierend von verschiedenen Prüflingen (31, 32) kommend, einmal der einen Seite A der zweiflutigen Molekularpumpe über einen der Einlassstutzen (22a, 24a, 26a) und einmal der anderen Seite B über einen der Einlassstutzen (22b, 24b, 26b) jeweils an einer Stelle zugeführt wird, die ein Druckniveau zwischen Hochvakuumdruck und Vorvakuumdruck aufweist, wobei jeweils ein Teil des Prüfgases gegen die Pumprichtung auf die Hochvakuumseite und somit in den Gasdetektor (20) gelangt und danach nach beiden Hochvakuumseiten der zweiflutigen Molekularpumpe hin und anschließend über getrennte Vorvakuumsysteme, bestehend auf der einen Seite A aus dem Vorvakuumraum (15), einem Vorvakuumanschluss (17a) und einer Vorvakuumpumpe (19a) und auf der anderen Seite B aus dem Vorvakuumraum (16), einem Vorvakuumanschluss (17b) und einer Vorvakuumpumpe (19b), abgepumpt wird.

4. Lecksuchverfahren nach Anspruch 3, **dadurch gekennzeichnet, dass** es sich bei den Prüflingen (31) und (32) um ein und denselben Prüfling handelt.

5. Lecksuchanordnung nach Anspruch 2, , **dadurch gekennzeichnet, dass** auf beiden Seiten A und B der zweiflutigen Molekularpumpe jeweils zwischen Hochvakuumanschluss (14) und Vorvakuumraum (15, 16) ein oder mehrere Einlassstutzen (22a, 24a, 26a und 22b, 24b, 26b) zur Zuführung von Prüfgas aus Prüflingen (31, 32) an Stellen mit einem Druckniveau zwischen Hochvakuumdruck und Vorvakuumdruck angebracht sind und dass die beiden Vorvakuumräume (15, 16) nicht mit einander verbunden sind und mit jeweils einem separaten Vorvakuumanschluss (18a, 18b) versehen sind, an welchen sich separate Vorvakuumpumpen (19a, 19b) anschließen.

6. Lecksuchanordnung nach Anspruch 5, **dadurch gekennzeichnet, dass** es sich bei den Prüflingen (31) und (32) um ein und denselben Prüfling handelt.

## Claims

1. Leak detection method with the aid of a dual-flow molecular pump, to the high vacuum connection (14) of which a gas detector (20) is connected and the two fore-vacuum spaces (15, 16) of which are connected to at least one fore-vacuum pump (19, 19a, 19b), wherein the test gas is fed by means of one of the inlets (22, 24, 26), which are attached on one side (A) of the dual-flow molecular pump, to the molecular pump at a location having a pressure level between high-vacuum pressure and fore-vacuum pressure, **characterised in that** some of the test gas arrives counter to the pumping direction at the high-vacuum side and therefore into the gas detector (20) and is thereafter pumped off toward the two high-vacuum sides of the dual-flow molecular pump and then by means of a fore-vacuum system, consisting of the two fore-vacuum spaces (15, 16) a connecting line (17) and a fore-vacuum pump (19).

2. Leak detection arrangement, with a dual-flow molecular pump with a high-vacuum connection (14) and a gas detector (20) connected thereto with a connecting line (17), which joins two fore-vacuum spaces (15, 16) together to a common fore-vacuum connection (18), and a fore-vacuum pump (19) connected thereto, one or more inlets (22, 24, 26) to supply test gas from a test piece (30) being attached, on one side (A) of the dual-flow molecular pump between the high-vacuum connection (14) and the fore-vacuum space (15, 16), at locations with a pressure level between high-vacuum pressure and fore-vacuum pressure, **characterised in that** the high-vacuum connection (14) is connected to both sides (A, B) of the dual-flow molecular pump, and **in that** the leak detection arrangement is arranged to pump off some of the test gas toward the two high-vacuum sides of the dual-flow molecular pump and then by means of a fore-vacuum system, consisting of the two fore-vacuum spaces (15, 16) the connecting line (17) and the fore-vacuum pump (19).

3. Leak detection method according to claim 1, **characterised in that** the test gas, coming alternately from various test pieces (31, 32), is fed firstly to the one side A of the dual-flow molecular pump by means of one of the inlets (22a, 24a, 26a), and then to the other side B by means of one of the inlets (22b, 24b, 26b) in each case at a location, which has a pressure level between high-vacuum pressure and a fore-vacuum pressure, some of the test gas in each case arriving counter to the pumping direction at the high-vacuum side and therefore into the gas detector (20) and thereafter being pumped off toward both high-vacuum sides of the dual-flow molecular pump and then by means of separate fore-vacuum systems, consisting on the one side A of the fore-vacuum space (15), a fore-vacuum connection (17a) and a fore-vacuum pump (19a) and, on the other side B, of the fore-vacuum space (16), a fore-vacuum connection (17b) and a fore-vacuum pump (19b).

4. Leak detection method according to claim 3, **characterised in that** the test pieces (31) and (32) are one and the same test piece.

5. Leak detection arrangement according to claim 2, **characterised in that** one or more inlets (22a, 24a, 26a and 22b, 24b, 26b) for supplying test gas from test pieces (31, 32) are attached at locations with a pressure level between high-vacuum pressure and fore-vacuum pressure on both sides A and B of the dual-flow molecular pump, in each case between the high-vacuum connection (14) and fore-vacuum space (15, 16) and **in that** the two fore-vacuum spaces (15, 16) are not connected to one another and are in each case provided with a separate fore-vacuum connection (18a, 18b), to which separate fore-vacuum pumps (19a, 19b) are attached.

6. Leak detection arrangement according to claim 5, **characterised in that** the test pieces (31) and (32) are one and the same test piece.

## Revendications

1. Procédé de détection de fuites utilisant une pompe moléculaire à double flux dont le raccord de vide poussé (14) est connecté à un détecteur de gaz (20) et dont les deux chambres à vide préliminaire (15, 16) sont reliées à au moins une pompe à vide préliminaire (19, 19a, 19b), procédé dans lequel le gaz témoin est envoyé vers la pompe moléculaire - par le biais de l'une des tubulures d'admission (22, 24, 26) agencées sur un côté (A) de ladite pompe moléculaire à double flux - à un point où la pression est à un niveau intermédiaire entre le vide poussé et le vide préliminaire, **caractérisé en ce qu'**une portion du gaz témoin parvient - dans le sens contraire au sens de pompage - jusqu'au côté du vide poussé et donc dans le détecteur de gaz (20), avant d'être évacuée par pompage vers les deux côtés de vide poussé de la pompe moléculaire à double flux, puis à travers un système de vide préliminaire constitué des deux chambres à vide préliminaire (15, 16), d'une conduite de liaison (17) et d'une pompe à vide préliminaire (19).

2. Dispositif de détection de fuites comprenant
- une pompe moléculaire à double flux dotée d'un raccord de vide poussé (14) auquel est connecté un détecteur de gaz (20),
- une conduite de liaison (17) réunissant deux chambres à vide préliminaire (15, 16) vers un seul raccord de vide préliminaire (18) commun
- et, relié à ce dernier, une pompe à vide préliminaire (19), dispositif dans lequel il est agencé, sur un côté A de la pompe moléculaire à double flux, entre le raccord de vide poussé (14) et la chambre à vide préliminaire (15, 16), une ou plusieurs tubulures d'admission (22, 24, 26), afin de conduire du gaz témoin provenant d'un échantillon (30) vers des points où la pression est à un niveau intermédiaire entre le vide poussé et le vide préliminaire, **caractérisé en ce que** le raccord de vide poussé (14) est connecté aux deux côtés (A, B) de la pompe moléculaire à double flux et **en ce que** ledit dispositif est conçu pour évacuer par pompage une portion du gaz témoin vers les deux côtés de vide poussé de la pompe moléculaire à double flux, puis à travers un système de vide préliminaire constitué des deux chambres à vide préliminaire (15, 16), de la conduite de liaison (17) et de la pompe à vide préliminaire (19).

3. Procédé de détection de fuites selon la revendication 1, **caractérisé en ce que** le gaz témoin, provenant en alternance de différents échantillons (31, 32), est conduit une fois vers le côté A de la pompe moléculaire à double flux - par le biais de l'une des tubulures d'admission (22a, 24a, 26a) - et une fois vers le côté B - par le biais de l'une des tubulures d'admission (22b, 24b, 26b) - et ce respectivement à un point où la pression est à un niveau intermédiaire entre le vide poussé et le vide préliminaire, tandis qu'à chaque fois une portion du gaz témoin parvient - dans le sens contraire au sens de pompage - jusqu'au côté du vide poussé et donc dans le détecteur de gaz (20), avant d'être évacuée par pompage vers les deux côtés de vide poussé de la pompe moléculaire à double flux, puis à travers deux systèmes de vide préliminaire séparés, ces derniers étant constitués du côté A de la chambre à vide préliminaire (15), du connecteur de vide préliminaire (17a) et d'une pompe à vide préliminaire (19a) et du côté B de la chambre à vide préliminaire (16), d'un connecteur de vide préliminaire (17b) et d'une pompe à vide préliminaire (19b).

4. Procédé de détection de fuites selon la revendication 3, **caractérisé en ce que** les échantillons (31) et (32) sont un seul et même échantillon.

5. Dispositif de détection de fuites selon la revendication 2, **caractérisé en ce qu'**il est agencé, sur les deux côtés A et B de la pompe moléculaire à double flux, respectivement entre le raccord de vide poussé (14) et la chambre à vide préliminaire (15, 16), une ou plusieurs tubulures d'admission (22a, 24a, 26a et 22b, 24b, 26b), afin d'amener du gaz témoin provenant d'échantillons (31, 32) à des points où la pression est à un niveau intermédiaire entre le vide poussé et le vide préliminaire, et **en ce que** les deux chambres à vide préliminaire (15, 16) ne sont pas reliées entre elles mais dotées chacune d'un raccord de vide poussé séparé (18a, 18b), suivi respectivement d'une pompe à vide préliminaire (19a, 19b) séparée.

6. Dispositif de détection de fuites selon la revendication 5, **caractérisé en ce que** les échantillons (31) et (32) sont un seul et même échantillon.
